# EUROPEAN PATENT APPLICATION

(11) **EP 3 364 285 A1**
(43) Date of publication of application: **22.08.2018**
(21) Application number: 18156837.9
(22) Date of filing: 15.02.2018
(51) Int. Cl.: G06F 3/0488, G06F 3/0482

(54) **METHOD, APPARATUS, COMPUTER PROGRAM AND STORAGE MEDIUM FOR UPDATING INFORMATION**

(30) Priority: 21.02.2017 CN 201710093279
(71) Applicant: Beijing Xiaomi Mobile Software Co., Ltd., Beijing 100085 (CN)
(72) Inventor: YONG, Xing, Beijing, 100085 (CN); LI, Yueting, Beijing, 100085 (CN); XING, XinYan, Beijing, 100085 (CN)
(74) Representative: Grunert, Marcus

(57) **Abstract**

A method, an apparatus, a computer program and a storage medium are provided for updating information in the technical field of information process. The method may include: displaying a message list including at least one first information entry; detecting an operation for updating contents of the first information entry; determining, in response to detection of the content updating operation, a second information entry indicated by the content updating operation, the first information entry including the second information entry; and updating contents of the second information entry. With this method, the terminal can update contents of a designated information entry based on the content updating operation by a user, making the updating more targeted, and more adapted to the user's reading demands.

## Description

### TECHNICAL FIELD

The present invention relates to the technical field of information processing, and more particularly, to a method, an apparatus, a computer program and a storage medium for updating information.

### BACKGROUND

With the development of information processing technology, more and more users get information such as news information by using network applications such as browsers or news Applications (APPs) installed on a terminal. Generally, one page of such network applications will display a message list in which multiple information entries for the user to select may be included.

Generally, on the pages of such network applications, when having detected an operation for selecting a certain information entry, the terminal may display an information content corresponding to the information entry; and when having detected an operation for pulling downward, the terminal may refresh information entries on the current page, thereby displaying the refreshed information entries on the position above the first information entry of the current page.

### SUMMARY

In order to solve the problem existing in the related art, the present invention provides a method, an apparatus, a computer program and a storage medium for updating information.

According to a first aspect of the embodiments of the present invention, a method for updating information is provided and includes: displaying a message list including at least one first information entry on a screen; detecting an operation for updating contents of the first information entry, wherein the operation indicates a second information entry in a specified region on the screen; determining, in response to detection of the content updating operation, the second information entry indicated by the content updating operation in the specified region, the first information entry including the second information entry; and updating contents of the second information entry in the specified region.

Optionally, updating contents of the second information entry includes: obtaining a target category; and updating the contents of the second information entry to the contents of the target category.

Optionally, the target category includes at least one of: a category of the contents of the second information entry, a category of interest, and a predetermined category.

Optionally, the content updating operation includes at least one of: a double click, a sliding along a predetermined trajectory, and an operation instructing completion of reading.

Optionally, the second information entry is in an already-read state.

According to a second aspect of the embodiments of the present invention, an apparatus for updating information is provided and includes: a displaying module configured to display a message list including at least one first information entry on a screen; a detecting module configured to detect an operation for updating contents of the first information entry, wherein the operation indicates a second information entry in a specified region on the screen; a determining module configured to determine, in response to detection of the content updating operation, the second information entry indicated by the content updating operation in the specified region, the first information entry including the second information entry; and an updating module configured to update contents of the second information entry in the specified region.

Optionally, the updating module includes: an obtaining sub-module configured to obtain a target category; and an updating sub-module configured to update the contents of the second information entry to the contents of the target category.

Optionally, the target category includes at least one of: a category of the contents of the second information entry, a category of interest, and a predetermined category.

Optionally, the content updating operation includes at least one of: a double click, a sliding along a predetermined trajectory, and an operation instructing completion of reading.

Optionally, the second information entry is in an already-read state.

According to a third aspect of the embodiments of the present invention, an apparatus for updating information is provided and includes: a processor; and a memory configured to store instructions executable by the processor, wherein the processor is configured to: display a message list including at least one first information entry on a screen; detect an operation for updating contents of the first information entry, where the operation indicates a second information entry in a specified region on the screen; determine, in response to detection of the content updating operation, the second information entry indicated by the content updating operation in the specified region, the first information entry including the second information entry; and update contents of the second information entry in the specified region.

In one particular embodiment, the steps of the method for updating information are determined by computer program instructions.

According to a fourth aspect of the embodiments of the present invention, a computer program is provided for executing the steps of the method for updating information as described above when this program is executed by a computer.

This program can use any programming language and take the form of source code, object code or a code intermediate between source code and object code, such as a partially compiled form, or any other desirable form.

According to a fifth aspect of the embodiments of the present invention, a computer-readable information medium is also provided that contains instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by the embodiments of the present invention may have the following advantageous effects. When an operation for updating contents of the first information entry has been detected, a second information entry indicated by the content updating operation is determined and contents of the second information entry are updated. In this way, contents of a designated information entry may be updated based on the content updating operation by a user, making the updating more targeted, and more adapted to the user's reading demands.

It should be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart illustrating a method for updating information according to an exemplary embodiment.
Fig. 2 is a flow chart illustrating a method for updating information according to an exemplary embodiment.
Fig. 3 is a schematic diagram illustrating an information updating page according to embodiments of the present invention.
Fig. 4A is a block diagram illustrating an apparatus for updating information according to an exemplary embodiment.
Fig. 4B is a block diagram illustrating an updating module according to an exemplary embodiment.
Fig. 5 is a block diagram illustrating an apparatus for updating information according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise indicated. The implementations set forth in the following description of exemplary embodiments do not represent all implementations consistent with the invention. Instead, they are merely examples of apparatuses and methods consistent with aspects related to the invention as recited in the appended claims.

Before explaining and describing embodiments of the present invention in detail, we will first introduce application scenarios of the embodiments of the present invention. When a user reads information such as news information by using network applications such as browsers or news APPs installed on a terminal, on one page of such network applications, the terminal may display multiple information entries in a message list of the current page. When having detected an operation for selecting a certain information entry, the terminal may display an information content of the information entry. When having detected an operation for pulling downward, the terminal may refresh the information entry on the current page, thereby displaying the refreshed information entry on the position above the first information entry of the current page.

That is, when updating contents of information entries displayed on the current page, the user often refreshes the entire current page, but cannot refresh contents of a certain specific information entry. Also, after being refreshed, contents of the information entries having been read before will still remain on the current page while the updated contents of information entries are displayed. In this way, more and more information entries are cached on the current page as the user's reading time increases, and these already-read information entries occupy vast system resources. In addition, when the user refreshes the information entries on the current page by using an operation for pulling downward, a category of the updated information obtained by the terminal is often random, and in this case, contents of the information entries updated by the terminal are possibly not the information the user is interested in.

Here, in order to solve the above-mentioned problems, embodiments of the present invention provide a method for updating information. In this method, when having detected an operation for updating contents of a first information entry, the terminal may determine a second information entry indicated by the content updating operation, and update contents of the second information entry. In this way, the terminal may update contents of a designated information entry based on the content updating operation by a user, making the updating more targeted, and more adapted to the user's reading demands. In addition, the terminal may further update the contents of the second information entry based on a category of the contents of the second information entry, a category the user is interested in, or a predetermined category, thereby making the updated information more adapted to the user's demands, and more targeted. Furthermore, when updating the contents of the second information entry, the terminal intentionally deletes the previous contents of the second information entry and will not increase the number of information entries, avoiding an unnecessary waste of system resources, and ensuring the simplicity of network application interfaces.

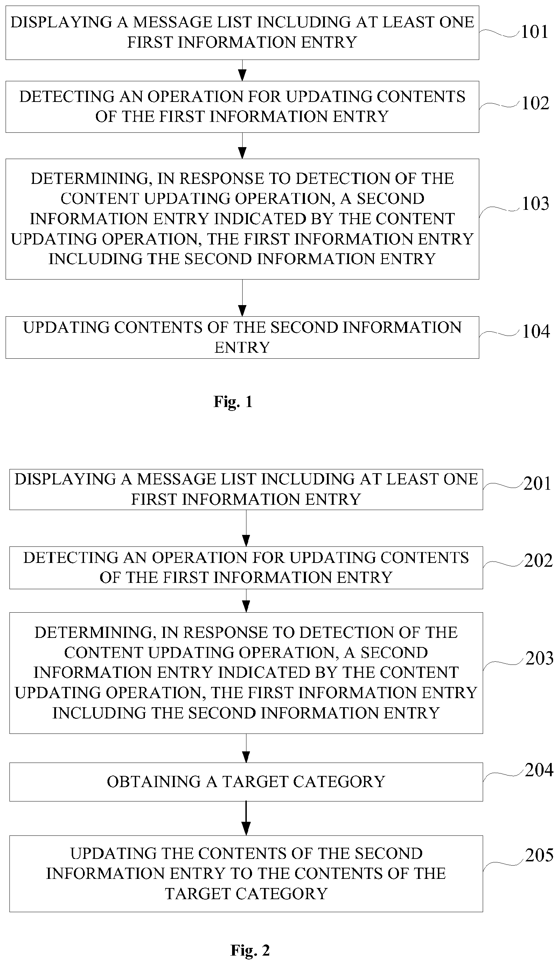

Fig. 1 is a flow chart illustrating a method for updating information according to an exemplary embodiment. As shown in Fig. 1, the method for updating information is applicable to a terminal, and includes the following steps.

At step 101, a message list including at least one first information entry is displayed on a screen of the terminal. The message list may include news, stories, messages, or other information displayed on a smart phone or other electronic devices.

At step 102, an operation for updating contents of the first information entry is detected, wherein the operation indicates a second information entry in a specified region on the screen. The operation for updating contents may include a pull swipe on the display screen. The operation for updating contents may be customized by the user.

At step 103, in response to detection of a content updating operation, the terminal determines the second information entry indicated by the content updating operation, wherein the first information entry includes the second information entry.

At step 104, contents of the second information entry is updated. For example, the terminal may update the contents of the second information entry in the specified region on the screen.

In the embodiments of the present invention, when having detected an operation for updating contents of the first information entry, the terminal may determine a second information entry indicated by the content updating operation and update contents of the second information entry. In this way, the terminal may update contents of a designated information entry based on the content updating operation by a user, making the updating more targeted, and more adapted to the user's reading demands.

Optionally, updating contents of the second information entry includes: obtaining a target category; and updating the contents of the second information entry to the contents of the target category.

Optionally, the target category includes at least one of: a category of the contents of the second information entry, a category of interest, and a predetermined category.

Optionally, the content updating operation includes at least one of: a double click, a sliding along a predetermined trajectory, and an operation instructing completion of reading. Additionally or alternatively, the content updating operation may include a voice input or a gesture input preset by the user.

Optionally, the second information entry is in an already-read state. When the second information entry is in the already-read state, the terminal may only update the already-read information by replacing the original second information with updated second information.

Two or more of all the above-mentioned optional technical solutions can be combined with each other in an arbitrary manner to form the optional embodiments of the present invention, which will not be repeated any more in the embodiments of the present invention.

Fig. 2 is a flow chart illustrating a method for updating information according to an exemplary embodiment. As shown in Fig. 2, the method for updating information is applicable to a terminal, and includes the following steps.

At step 201, a message list including at least one first information entry is displayed.

Generally, when a user reads information by using network applications such as browsers or news APPs installed on a terminal, the terminal will display a message list on one page of such network applications, and the message list may include at least one first information entry. When having detected an operation for selecting any first information entry, the terminal displays contents of the selected first information entry. When having read the contents or being not interested in the contents, the user may quit the page for displaying the contents and return to the page on which the selected first information entry is displayed.

At step 202, it is detected an operation for updating contents of the first information entry.

Based on the description for step 201, the user may select any first information entry displayed in the message list, and the terminal may display contents of the selected first information entry. In this case, when having detected that returning to the page on which the first information entry is displayed, the terminal may detect whether there is an operation for updating the contents of the first information entry.

Of course, when catching sight of the first information entry, the user may be interested in the first information entry without reading the contents of the first information entry. Therefore, the terminal may also detect whether there is an operation for updating the contents of the first information entry in real time.

Herein, the deleting operation may be a sliding operation along a predetermined trajectory, such as a rightward sliding operation or a leftward sliding operation. Of course, the content updating operation may also be a double click operation or an operation instructing completion of reading.

At step 203, in response to detection of a content updating operation, a second information entry indicated by the content updating operation is determined, the first information entry including the second information entry.

When the content updating operation is detected, an information entry on which the content updating operation is performed may be determined as a second information entry. In this case, the second information entry is just an information entry the user wants to update. Since the user may perform an operation for updating the contents of the information entry after having read the contents of the information, the second information entry may be in an already-read state. Of course, since the user may perform an operation for updating the contents of the information entry due to being interested in the contents of the information entry after having read it, the second information entry may also be an information entry the user is interested in.

At step 204, a target category is obtained.

Herein, the target category may be a category of the contents of the second information entry, a category of interest, or a predetermined category.

After determining the second information entry indicated by the content updating operation, the terminal may obtain the target category, and the terminal may obtain the target category by the following modes based on different target categories.

A first mode: since the second information entry may be an information entry the user is interested in, the terminal may directly obtain the category of the contents of the second information entry as the target category. Herein, the terminal may grab keywords in the contents of the second information entry, and then the terminal may determine the target category based on the keywords.

A second mode: since the second information entry may also be an information entry having been read and the user possibly does not want to read such information of this category any more, the terminal may obtain the category of interest as the target category in order to make the obtained target category more adapted to the user's reading demands.

Herein, the terminal may first determine whether the category of the contents of the second information entry is the category the user is interested in. When the category of the contents of the second information entry is the category the user is interested in, the target category may be obtained by the first mode; and when the category of the contents of the second information entry is not the category the user is interested in, the category the user is interested in may be determined based on other first information entries in the message list.

The terminal may determine whether the category of the contents of the second information entry is the category the user is interested in by the following two procedures.

A first procedure: a browsing duration for the contents of the second information entry is determined, and when the browsing duration is larger than the preset duration, the category of the contents of the second information entry is determined as the category of interest. Herein, the browsing duration is the time period during which the contents of the second information entry are browsed most recently before the time when the content updating operation is detected.

The terminal may obtain the browsing duration for the contents of the second information entry from the browsing information on the current page, and determine whether the browsing duration is larger than the preset duration. When the browsing duration is larger than the preset duration, the category of the contents of the second information entry is determined as the category of interest; and when the browsing duration is not larger than the preset duration, the category of the contents of the second information entry is determined as the category of no interest.

Generally, when browsing contents of an information entry, the user may stay for a longer time on the page displaying the contents (meaning a longer browsing duration) if being more interested in the contents. Of course, the browsing duration also cannot be too long, such that if the browsing duration far exceeds the longest duration which should be required for the contents to be browsed, there is possibly an abnormity in browsing the contents.

For example, it only takes a browsing duration of 5 minutes to browse the contents at the slowest reading speed, but the browsing duration actually determined by the terminal is 45 minutes. Then, in this case, an abnormity in browsing the contents for the user may be determined.

Therefore, in order to solve the above-mentioned problem, the terminal may further determine whether the browsing duration is larger than a preset duration upper limit for the contents after the terminal determines that the browsing duration is larger than the preset duration. When the browsing duration is larger than the preset duration upper limit for the contents, an abnormity in browsing the contents for the user may be determined. Then, the terminal finishes the procedure.

Herein, the preset duration upper limit is a preset time period based on the longest duration required for the contents to be browsed. For example, when the longest duration required for the contents to be browsed is 5 minutes, the preset duration upper limit may be 15 minutes, 20 minutes, and so on.

A second procedure: a browsed proportion for the contents of the second information entry is determined, and when the browsed proportion is larger than the preset proportion, the category of the contents of the second information entry is determined as the category of interest. Herein, the browsed proportion is a proportion of browsed contents in the contents of the second information entry, and the browsed contents are contents browsed most recently before the time when the content updating operation is detected, among the contents of the second information entry.

Generally, the browsed proportion for the contents of the second information entry may be larger, if the user is more interested in the contents of the second information entry. Therefore, the terminal may calculate the browsed proportion of the browsed contents in the contents of the second information entry by determining the browsed contents, thereby determining whether the category of the contents of the second information entry is a category of interest. When the browsed proportion is larger than the preset proportion, the category of the contents of the second information entry is determined as the category of interest; and when the browsed proportion is not larger than the preset proportion, the category of the contents of the second information entry is determined as the category of no interest.

Herein, when the terminal displays the contents of the second information entry, the length of the contents on the page may be possibly larger than the length of the terminal screen. In this case, the user may move the page up and down to read it by a sliding operation, or after having finished reading the contents on the current page, the user may perform page flipping on all the contents on the current page by other page flipping operations, so as to continue to read the remaining contents on the next page. Based on the above-mentioned conditions, the terminal may determine the browsed contents in the contents of the second information entry from the following two aspects.

In one aspect, when the user moves the page up and down to read it by a sliding operation, the terminal may determine the most recent sliding operation before the time when the content updating operation is detected, determine the sliding end position corresponding to the sliding operation, and then determine the browsed contents among the contents of the second information entry based on the sliding end position.

Herein, since the sliding operation may include an upward sliding operation for instructing the page to move up and may also include a downward sliding operation for instructing the page to move down, operation modes for determining the browsed contents among the contents of the second information entry based on the sliding end position may further include the following two kinds.
(1) Generally, when reading the contents of the second information entry, the user may browse the contents in a top-down manner from the top of the terminal screen. In this case, the user may move the page by the upward sliding operation for instructing the page to move up. When the sliding operation is the upward sliding operation, the sliding end position may be the position corresponding to the bottom of the terminal screen on the page when the page stops moving. Thereafter, the terminal may determine all the contents positioned above the sliding end position as the browsed contents.
(2) Of course, if it requires the user to read the contents of the second information entry in a down-top manner, the sliding operation may be the downward sliding operation. When the sliding operation is the downward sliding operation, the sliding end position may be the position corresponding to the top of the terminal screen on the page when the page stops moving. Thereafter, the terminal may determine all the contents positioned below the sliding end position as the browsed contents.

In another aspect, when the user performs a page flipping operation on all the contents on the current page by other page flipping operation operations, if the terminal detects the page flipping operation, the terminal may perform the page flipping on the current page and display the contents on the next page. Thereafter, the terminal may determine the displayed contents and the contents that are flipped over as the browsed contents.

The terminal may determine the browsed contents among the contents of the second information entry from either one of the above-mentioned two aspects. Of course, in order to more accurately determine the browsed contents, the terminal may also determine the browsed contents by combining the above-mentioned two aspects. Specific implements will not be repeated in the embodiments of the present invention.

After the terminal determines the browsed contents, the terminal may determine the number of the words in the browsed contents and the number of the words in the contents of the second information entry, and the terminal may divide the number of the words in the browsed contents by the number of the words in the contents of the second information entry to thereby obtain the browsed proportion.

Optionally, when the contents of the second information entry include many pictures and the texts in the contents of the second information entry are non-uniformly distributed, the browsed proportion calculated by the above-mentioned aspects may have a larger deviation. Therefore, the terminal may determine the length of the browsed contents on the page and the length of the contents of the second information entry on the page, and may divide the length of the browsed contents on the page by the length of the contents of the second information entry on the page, so as to obtain the browsed proportion by calculating.

Optionally, when the category of the contents of the second information entry is the category the user is not interested in, the terminal may determine whether categories of the contents of other first information entries displayed in the message list are the categories the user is interested in based on the browsing duration and/or the browsed proportion for the above-mentioned contents of other first information entries. Thereafter, the terminal ranks the categories the user is interested in based on sizes of the browsing duration and/or the browsed proportion, and obtains the ranking result. Herein, with respect to determining whether categories of the contents of other first information entries displayed in the message list are the categories the user is interested in based on the browsing duration and/or the browsed proportion for the above-mentioned contents of other first information entries, it may be implemented by modes of the first procedure and the second procedure, which will not be repeated in the embodiments of the present invention.

A third mode: in order to more simply and also more quickly obtain the target category, the terminal may also pre-store a plurality of predetermined categories. After the terminal determines the second information entry based on the content updating operation, the terminal may directly select one of the pre-stored plurality of predetermined categories as the target category. Of course, the plurality of predetermined categories may also be a plurality of categories determined by the terminal based on the historical browsing information of network applications. For example, the terminal may previously determine categories of the information entries browsed by the user based on the historical browsing information of the network applications, rank the categories based on respective total browsing durations, and pre-store the categories ranked in the top three or five as the predetermined categories.

At step 205, the contents of the second information entry are updated to the contents of the target category. Accordingly, the terminal may update the contents of the second information entry and keep the other displayed contents the same. In other words, the terminal may only update the already-read information by replacing the already-read entry or entries with the most up-to-date relevant information or messages in the same target category. The terminal may return to the previous information list if a return key is pressed or clicked.

On the one hand, when having obtained the target category, the terminal may send to a server an information obtaining request in which the information obtaining time and the target category are carried. When having received the information obtaining request, the server may obtain a plurality of updated information contents which are updated since the information obtaining time to the current time and belong to the same category as the target category. Thereafter, the server may calculate a plurality of time differences between the information obtaining time and the updating times of the plurality of updated information contents, select an updated information content corresponding to the updating time having the maximum time difference among the plurality of time differences, and send the selected updated information content to the terminal. The terminal receives the updated information content sent by the server, and updates the contents of the second information entry based on the received updated information content. Herein, the information obtaining time is the time at which the updated information content is most recently obtained before the current time.

On the other hand, in order to ensure the timeliness of updating information by the terminal, the terminal may previously cache a part of updated information contents. That is, before obtaining the target category, the terminal may send to a server an information obtaining request, which may carry the information obtaining time and categories of the contents of all the first information entries displayed in the message list on the current page. When having received the information obtaining request, the server may obtain the updated information contents updated since the information obtaining time to the current time, and sort the obtained updated information contents based on multiple content categories. Thereafter, the server may calculate the similarity between the updated information contents of the multiple content categories and the corresponding information displayed on the current page, and send the updated information contents and the similarity to the terminal. After having received the updated information contents and the similarity, the terminal correspondingly stores the updated information contents and the similarity.

When the target category obtained by the terminal is the category of the contents of the second information entry or the category of interest, the terminal may determine a plurality of updated information contents which belong to the same category as the target category, from the cached updated information contents. Further, the terminal may select the updated information content having the maximum similarity from the determined updated information contents, and update the contents of the second information entry based on the selected updated information content.

Additionally or alternatively, when the terminal updates the contents of the second information entry based on the selected updated information content, the terminal may delete the contents of the second information entry, and display the contents of updated information on the position where the contents of the second information entry are displayed. Accordingly, the terminal directly displays the updated information content on the position where the second information entry is displayed.

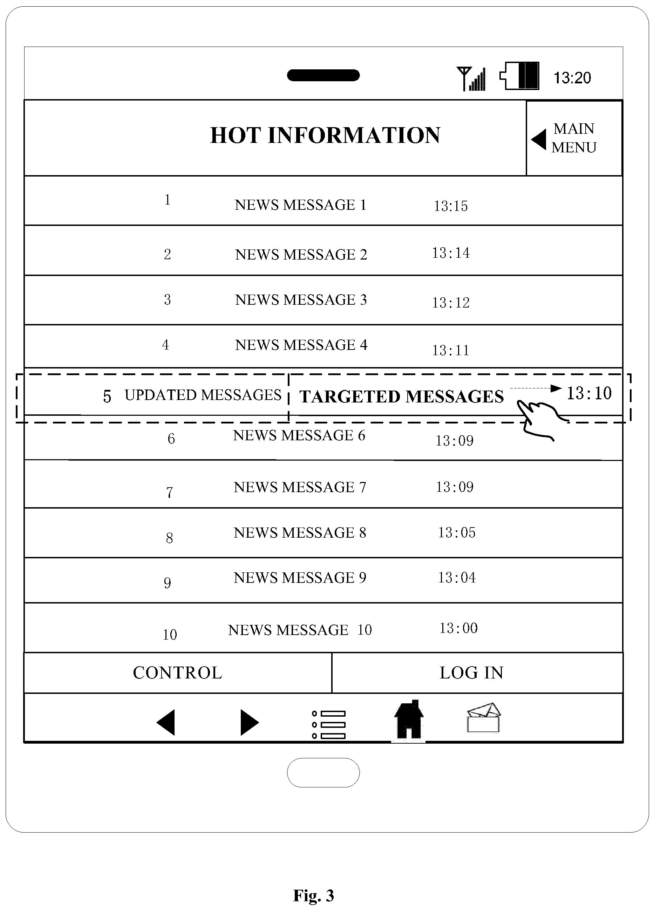

Fig. 3 is a schematic diagram illustrating an information updating page according to embodiments of the present invention. Each of steps according to the embodiments of the present invention is performed very fast, so during the user's use, when the content updating operation is a rightward sliding operation, the above-mentioned steps present such an effect on the page as shown in Fig. 3. The user performs the rightward sliding operation of the content updating operation on any of the first information entries. In this example, the second information entry may be any first information entry. The terminal deletes the second information entry, and then displays updated information on the position where the second information entry was displayed. Here, the updated information and the second information entry may belong to the same category.

In addition, the terminal generally displays information on the pages of network applications such as browsers or news APPs successively from top to bottom based on the updating time of information. Therefore, the terminal may delete the second information entry after having received the updated information, and directly display the updated information on the position below the last information in the message list, so that the user successively browses information displayed in the message list based on the updating time. Of course, the terminal may also directly display the updated information on the position above the first information in the message list, so that the user can view the latest information when the user returns to the current page after quitting the current page.

In the embodiments of the present invention, when having detected an operation for updating contents of the first information entry, the terminal determines a second information entry indicated by the content updating operation, and updates contents of the second information entry. In this way, the terminal may update contents of a designated information entry based on the content updating operation by a user, making the updating more targeted. In addition, the terminal may also update the contents of the second information entry based on a category of the contents of the second information entry, a category the user is interested in, or a predetermined category, making the updated information more adapted to the user's reading demands and further making the updated information more targeted. Furthermore, when updating the contents of the second information entry, the terminal may delete the contents of the second information entry, and update the second information entry to the updated information. In this way, the number of information entries in the message list may not increase, not only avoiding an unnecessary waste of system resources but also ensuring the simplicity of network application interfaces.

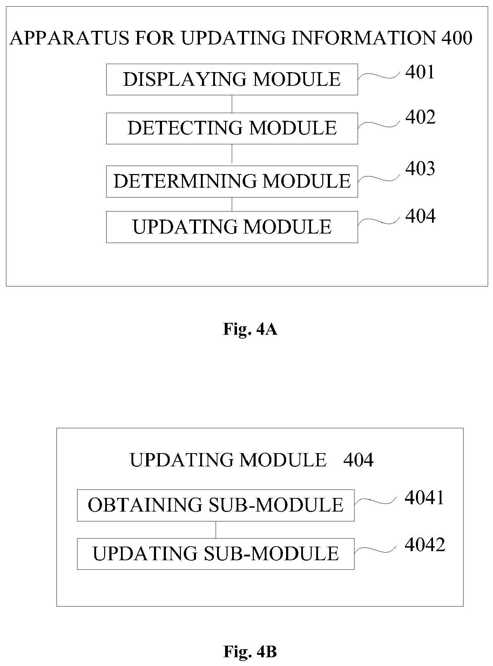

Fig. 4A is a block diagram illustrating an apparatus 400 for updating information according to an exemplary embodiment. Referring to Fig. 4A, the apparatus includes a displaying module 401, a detecting module 402, a determining module 403 and an updating module 404.

The displaying module 401 is configured to display a message list including at least one first information entry.

The detecting module 402 is configured to detect an operation for updating contents of the first information entry.

The determining module 403 is configured to determine, in response to detection of the content updating operation, a second information entry indicated by the content updating operation, the first information entry including the second information entry.

The updating module 404 is configured to update contents of the second information entry.

Optionally, referring to Fig. 4B, the updating module 404 includes: an obtaining sub-module 4041 configured to obtain a target category; and an updating sub-module 4042 configured to update the contents of the second information entry to the contents of the target category.

Optionally, the target category includes at least one of: a category of the contents of the second information entry, a category of interest, and a predetermined category.

Optionally, the content updating operation includes at least one of: a double click, a sliding along a predetermined trajectory, and an operation instructing completion of reading.

Optionally, the second information entry is in an already-read state.

In the embodiments of the present invention, when having detected an operation for updating contents of the first information entry, the terminal determines a second information entry indicated by the content updating operation, and updates contents of the second information entry. In this way, the terminal may update contents of a designated information entry based on the content updating operation by a user, making the updating more targeted. In addition, the terminal may also update the contents of the second information entry based on a category of the contents of the second information entry, a category of interest, or a predetermined category, making the updated information more adapted to the user's reading demands and further making the updated information more targeted. Furthermore, when updating the contents of the second information entry, the terminal may delete the contents of the second information entry, and update the second information entry to the updated information. In this way, the number of information entries in the message list may not increase, not only avoiding an unnecessary waste of system resources but also ensuring the simplicity of network application interfaces.

With respect to the apparatus in the above-mentioned embodiments, specific modes where each module of the apparatus performs an operation have been described in detail in related method embodiments, and will not be repeated herein.

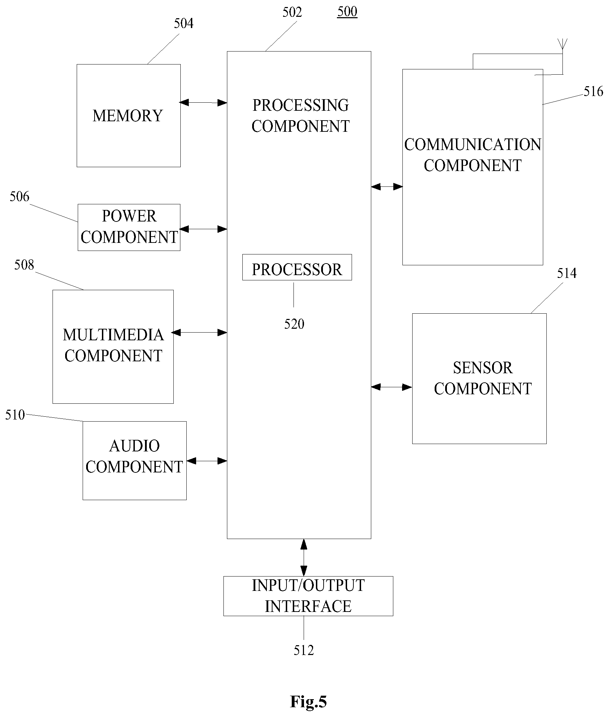

Fig. 5 is a block diagram illustrating an apparatus 500 for updating information according to an exemplary embodiment. For example, the apparatus 500 may be mobile phones, computers, digital broadcast terminals, message transceivers, game consoles, tablet devices, medical facilities, fitness equipment, personal digital assistants, and the like.

Referring to Fig. 5, the apparatus 500 may include one or more of the following components: a processing component 502, a memory 504, a power component 506, a multimedia component 508, an audio component 510, an input/output (I/O) interface 512, a sensor component 514, and a communication component 516.

The processing component 502 typically controls overall operations of the apparatus 500, such as the operations associated with display, phone calls, data communications, camera operations and recording operations. The processing component 502 may include one or more processors 520 to execute instructions to perform all or part of the steps in the above described methods. Moreover, the processing component 502 may include one or more modules which facilitate the interaction between the processing component 502 and other components. For example, the processing component 502 may include a multimedia module to facilitate the interaction between the multimedia component 508 and the processing component 502.

The memory 504 is configured to store various types of data to support operations of the apparatus 500. Examples of such data include instructions for any applications or methods operated on the apparatus 500, contact data, phonebook data, messages, pictures, video, etc. The memory 504 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 506 provides power to various components of the apparatus 500. The power component 506 may include a power supply management system, one or more power sources, and any other components associated with the generation, management, and distribution of power in the apparatus 500.

The multimedia component 508 includes a screen providing an output interface between the apparatus 500 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes and gestures on the touch panel. The touch sensors may not only sense a boundary of a touch or swipe action, but also sense a period of time and a pressure associated with the touch or swipe action. In some embodiments, the multimedia component 508 includes a front camera and/or a rear camera. The front camera and/or the rear camera may receive an external multimedia datum while the apparatus 500 is in an operation mode, such as a photographing mode or a video mode. Each of the front camera and the rear camera may be a fixed optical lens system or have focus and optical zoom capability.

The audio component 510 is configured to output and/or input audio signals. For example, the audio component 510 includes a microphone (MIC) configured to receive an external audio signal when the apparatus 500 is in an operation mode, such as a call mode, a recording mode, and a voice recognition mode. The received audio signal may be further stored in the memory 504 or transmitted via the communication component 516. In some embodiments, the audio component 510 further includes a speaker to output audio signals.

The I/O interface 512 provides an interface between the processing component 502 and peripheral interface modules, such as a keyboard, a click wheel, buttons, and the like. The buttons may include, but are not limited to, a home button, a volume button, a starting button, and a locking button.

The sensor component 514 includes one or more sensors to provide status assessments of various aspects of the apparatus 500. For instance, the sensor component 514 may detect an open/closed status of the apparatus 500, relative positioning of components, e.g., the display and the keypad, of the apparatus 500, a change in position of the apparatus 500 or a component of the apparatus 500, a presence or absence of user's contact with the apparatus 500, an orientation or an acceleration/deceleration of the apparatus 500, and a change in temperature of the apparatus 500. The sensor component 514 may include a proximity sensor configured to detect the presence of nearby objects without any physical contact. The sensor component 514 may also include a light sensor, such as a CMOS or CCD image sensor, for use in imaging applications. In some embodiments, the sensor component 514 may also include an accelerometer sensor, a gyroscope sensor, a magnetic sensor, a pressure sensor or a temperature sensor.

The communication component 516 is configured to facilitate communication, wired or wirelessly, between the apparatus 500 and other devices. The apparatus 500 can access a wireless network based on a communication standard, such as WiFi, 2G, or 3G, or a combination thereof. In one exemplary embodiment, the communication component 516 receives a broadcast signal or broadcast associated information from an external broadcast management system via a broadcast channel. In one exemplary embodiment, the communication component 516 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 500 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above methods.

In an exemplary embodiment, there is also provided a non-transitory computer-readable storage medium including instructions, such as included in the memory 504, executable by the processor 520 in the apparatus 500, for performing the above-described methods. For example, the non-transitory computer-readable storage medium may be a ROM, a RAM, a CD-ROM, a magnetic tape, a floppy disc, an optical data storage device, and the like.

There is provided a non-transitory computer-readable storage medium having stored therein instructions that, when executed by a processor of a mobile terminal, cause the mobile terminal to perform a method for updating information, the method comprising: displaying a message list including at least one first information entry; detecting an operation for updating contents of the first information entry; determining, in response to detection of the content updating operation, a second information entry indicated by the content updating operation, the first information entry including the second information entry; and updating contents of the second information entry.

Optionally, updating contents of the second information entry includes: obtaining a target category; and updating the contents of the second information entry to the contents of the target category.

Optionally, the target category includes at least one of: a category of the contents of the second information entry, a category of interest, and a predetermined category.

Optionally, the content updating operation includes at least one of: a double click, a sliding along a predetermined trajectory, and an operation instructing completion of reading.

Optionally, the second information entry is in an already-read state.

In the embodiments of the present invention, when having detected an operation for updating contents of the first information entry, the terminal determines a second information entry indicated by the content updating operation, and updates contents of the second information entry. In this way, the terminal may update contents of a designated information entry based on the content updating operation by a user, making the updating more targeted. In addition, the terminal may also update the contents of the second information entry based on a category of the contents of the second information entry, a category the user is interested in, or a predetermined category, making the updated information more adapted to the user's reading demands and further making the updated information more targeted. Furthermore, when updating the contents of the second information entry, the terminal may delete the contents of the second information entry, and update the second information entry to the updated information. In this way, the number of information entries in the message list will not increase, not only avoiding an unnecessary waste of system resources but also ensuring the simplicity of network application interfaces.

Other embodiments of the invention will be apparent to those skilled in the art from consideration of the specification and practice of the invention disclosed here. This application is intended to cover any variations, uses, or adaptations of the invention following the general principles thereof and including such departures from the present invention as come within known or customary practice in the art. It is intended that the specification and examples be considered as exemplary only, with a true scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for updating information, comprising:
displaying (101) a message list including at least one first information entry on a screen;
detecting (102) a content updating operation for updating contents of the first information entry, the content updating operation indicating a second information entry in a specified region on the screen;
determining (103), in response to detection of the content updating operation, the second information entry indicated by the content updating operation in the specified region, the first information entry including the second information entry; and
updating (104) contents of the second information entry in the specified region.

2. The method of claim 1, wherein updating (104) contents of the second information entry comprises:
obtaining a target category; and
updating the contents of the second information entry to the contents of the target category.

3. The method of claim 2, wherein the target category comprises at least one of: a category of the contents of the second information entry, a category of interest, and a predetermined category.

4. The method of any one of claims 1 to 3, wherein the content updating operation comprises at least one of: a double click, a sliding along a predetermined trajectory, and an operation instructing completion of reading.

5. The method of any one of claims 1 to 4, wherein the second information entry is in an already-read state.

6. An apparatus for updating information, comprising:
a displaying module (401) configured to display a message list including at least one first information entry on a screen;
a detecting module (402) configured to detect a content updating operation for updating contents of the first information entry, wherein the operation indicates a second information entry in a specified region on the screen;
a determining module (403) configured to determine, in response to detection of the content updating operation, the second information entry indicated by the content updating operation in the specified region, the first information entry including the second information entry; and
an updating module (404) configured to update contents of the second information entry in the specified region.

7. The apparatus of claim 6, wherein the updating module (404) comprises:
an obtaining sub-module (4041) configured to obtain a target category; and
an updating sub-module (4042) configured to update the contents of the second information entry to the contents of the target category.

8. The apparatus of claim 7, wherein the target category comprises at least one of: a category of the contents of the second information entry, a category of interest, and a predetermined category.

9. The apparatus of any one of claims 6 to 8, wherein the content updating operation comprises at least one of: a double click, a sliding along a predetermined trajectory, and an operation instructing completion of reading.

10. The apparatus of any one of claims 6 to 9, wherein the second information entry is in an already-read state.

11. An apparatus for updating information, comprising:
a processor (520) coupled with a screen; and
a memory (405) configured to store instructions executable by the processor,
wherein the processor (520) is configured to perform the method for updating information according to any one of claims 1 to 5.

12. A computer program including instructions for executing the steps of a method for updating information according to any one of claims 1 to 5 when the program is executed by a computer.

13. A storage medium readable by a computer and having recorded thereon a computer program including instructions for executing the steps of a method for updating information according to any one of claims 1 to 5.
